# EUROPEAN PATENT SPECIFICATION

(11) **EP 3 160 757 B1**
(45) Date of publication and mention of the grant of the patent: **22.09.2021**
(21) Application number: 15811269.8
(22) Date of filing: 23.06.2015
(51) Int. Cl.: B60B 33/02, B60B 33/00

(54) **SWIVEL LOCK FOR A CASTER**
SCHWENKARRETIERUNG FÜR EINEN NACHLAUF
VERROU PIVOTANT POUR UNE ROULETTE

(30) Priority: 27.06.2014 US 201414317389
(43) Date of publication of application: 03.05.2017
(73) Proprietor: Shepherd Caster LLC, St. Joseph, Michigan 49085 (US)
(72) Inventor: BEATTY, David Paul, Stevensville, Michigan 49127 (US)
(74) Representative: Forresters IP LLP
(86) International application number: PCT/US2015/037081
(87) International publication number: WO 2015/200258

(56) References cited:
- DE-U1-202004 016 810
- DE-U1-202013 103 770
- DE-U1-202013 103 770
- GB-B- 2 457 787
- US-A- 3 911 525
- US-A- 3 911 525
- US-A- 4 720 893
- US-A- 5 242 035
- US-A- 5 377 372
- US-A- 5 988 323

## Description

### Background and Summary

The disclosure relates to a swivel lock for a caster. In particular, the swivel lock may be configured to be actuated by a brake lever of the caster. The swivel lock comprises a male spline shaft and a female spline bushing which are releasably interlockable to prevent rotation of the caster about a swivel axis.
DE 20 2004 016 810 U1 discloses a caster having a support, a swivel pin, at least one running wheel, and a device that is used for blocking the swiveling movement and is to be actuated by a pedal. The swiveling movement is blocked by vertically displacing a swivel catch.
DE 20 2013 103 770 U1 discloses a steerable double-braking caster.
The invention is defined by the claims.

### Brief Description Of The Drawings

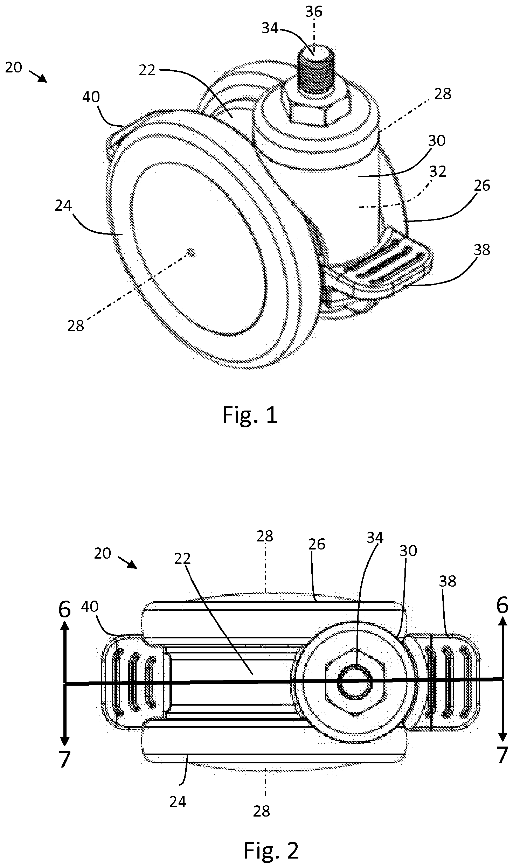

Figure 1 shows a perspective view of a caster with a swivel lock as described herein.
Figure 2 shows a top view of the caster of Figure 1.

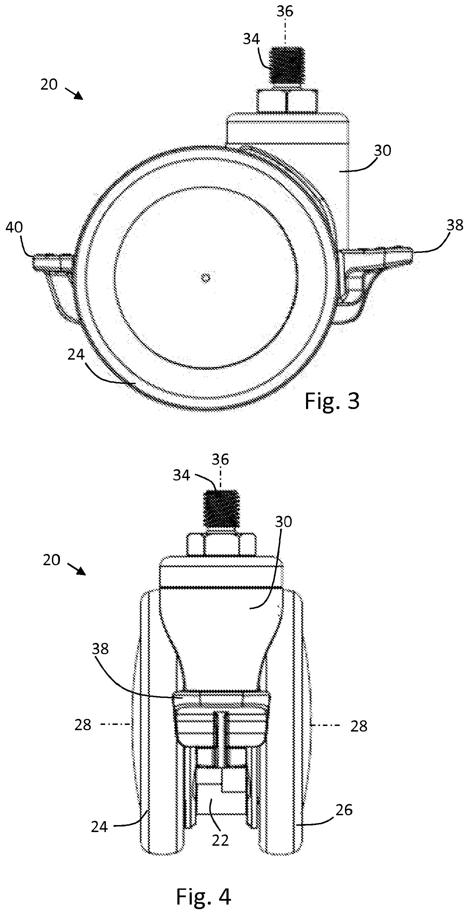

Figure 3 is a front view of the caster of Figure 1.
Figure 4 is a right side view of the caster of Figure 3.

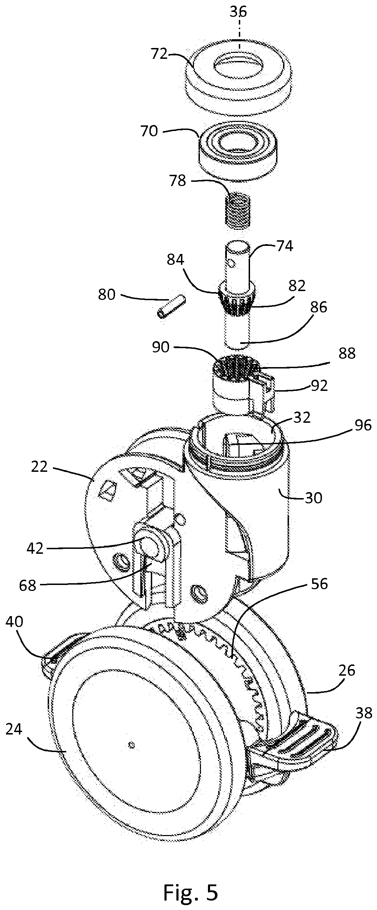

Figure 5 is an exploded view of the caster of Figure 1.
Figure 6 is a cross-sectional view taken along lines 6-6 of Figure 2.
Figure 7 is a cross-sectional view taken along lines 7-7 of Figure 2.

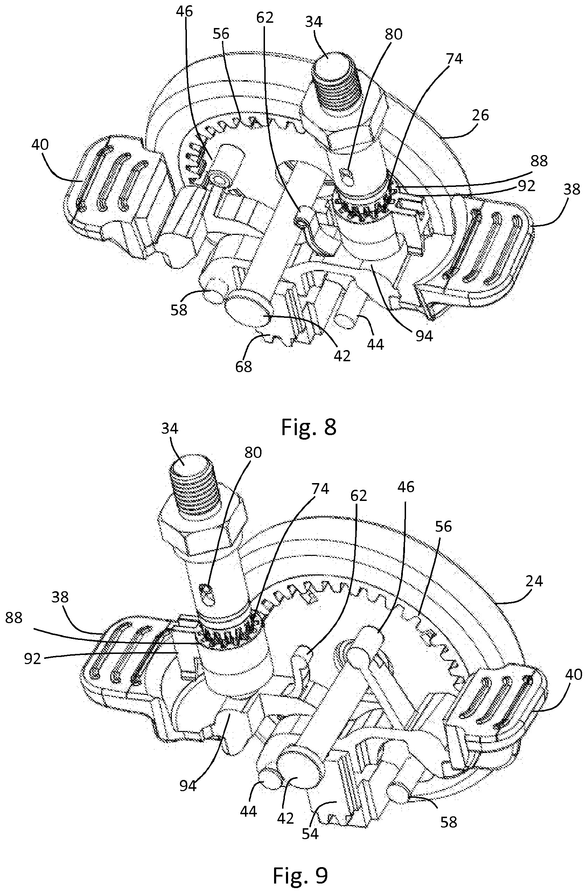

Figures 8-9 are perspective views of the caster of Figure 1 with a body and wheels of the caster removed to provide additional detail of one embodiment of the swivel lock.

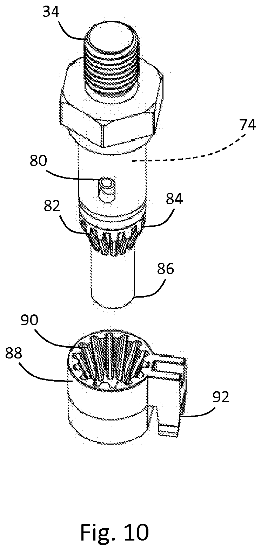

Figure 10 is a perspective view of an embodiment of a stem assembly and a spline bushing comprising the swivel lock described herein.

### Detailed Description

The caster 20 has a body 22 which serves as a frame for the components of the caster. The caster 20 has first and second wheels 24,26 that rotate about a wheel axis 28. The body 22 may have a portion 30 extending generally perpendicular to the wheel axis 28. The perpendicular extending portion 30 may have a stem cavity 32 that receives a stem 34 of the caster. The stem 34 rotates relative to the body 22 along a stem or swivel axis 36. The stem or swivel axis 36 is generally perpendicular to the wheel axis 28. The caster 20 may have a leading brake lever 38 generally adjacent to perpendicular extending portion 30 of the body 22, and a trailing brake lever 40 on the opposite side of the body. In the drawings, a two-wheeled caster is shown. In such a configuration, the leading brake lever 38 may be configured to prevent rotation of one wheel 26, and the trailing brake lever 40 may be configured to prevent rotation of the opposite wheel 24. The wheels 24,26 may be rotatably coupled to the body 22 with an axle 42.

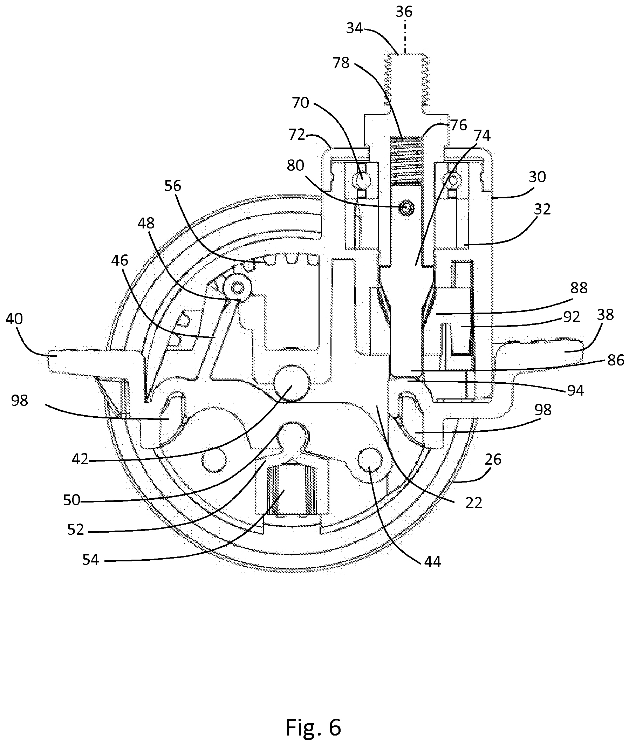

As best shown in Figure 6, the trailing brake lever 40 may be pivotally connected with the body with a pivot pin 44. The trailing brake lever 40 may have a finger 46 extending from the lever that engages one or more detents 48 in the body to maintain the lever in a desired position. The body 22 may be provided with the detent 48 to fix the position of the trailing brake lever 40 in the unlocked position. The finger 46 of the trailing brake lever 40 may cooperate with the detent 48 and may have a curved distal end to allow the finger 46 to slide and transition into and out of the detent 48. The trailing brake lever 40 may have a notch 50, and a lock block 52 may be coupled to the trailing brake lever at the notch. The lock block 52 may be configured to slide (for instance, vertically as shown in Figure 6) within the body 22. The lock block 52 may be coupled to a wheel teeth lock 54. The wheel teeth lock 54 may move within the body (for instance, vertically as shown in Figure 6) to engage wheel teeth 56 formed on an inner diameter surface of the wheel 26. The assembly of the lock block 52 and the wheel teeth lock 54 may be biased away from the wheel teeth 56 by a spring (not shown).

The trailing brake lever 40 may be rotated between an unlocked position in which the lock block 52 lifts the wheel teeth lock 54 upward out of engagement with the wheel teeth 56 to allow rotation of the wheel 26 about the body 22, and a locked position in which the lock block forces the wheel teeth lock downward into engagement with the wheel teeth to prevent rotation of the wheel about the body. Figure 6 show the trailing brake lever 40 in an unlocked position. Making reference to Figure 6, to position the trailing brake lever 40 to the locked position, the brake lever may be pivoted counterclockwise to drive the lock block 52 and the wheel teeth lock 54 downward. Downward force on the trailing brake lever 40 causes the lever to pivot about its pivot pin 44, releasing the finger 46 from the detent 48. The downward motion of the lever also moves the lock block 52 downward and drives the wheel teeth lock 54 against the wheel teeth 56 thereby preventing rotation of the wheel 26 about the wheel axis 28. To re-position the trailing brake lever 40 to the un-locked position, the brake lever may be pivoted clockwise to raise the assembly of the lock block 52 and the wheel teeth lock 54 and release the wheel teeth lock from the wheel teeth 56 thereby allowing rotation of the wheel 26 about the wheel axis 28.

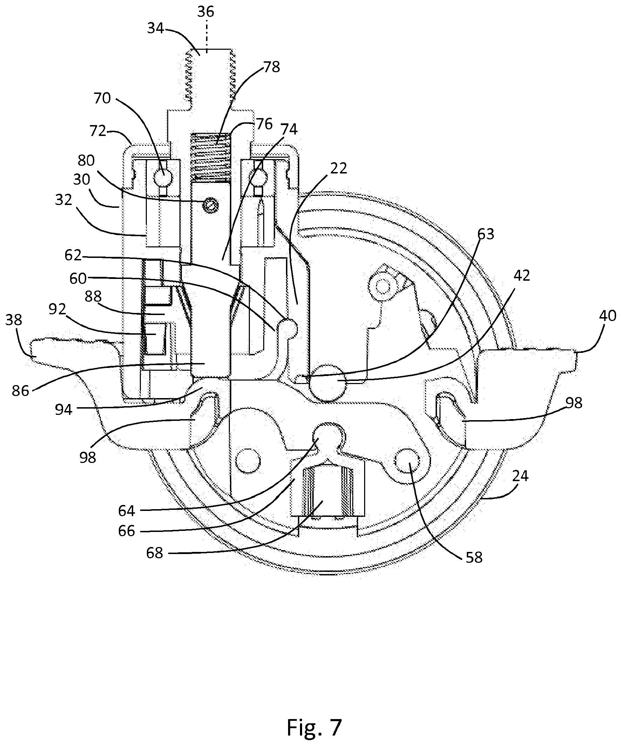

Making reference to Figure 7, the leading brake lever 38 has a similar configuration. The leading brake lever 38 may be pivotally connected with the body with a pivot pin 58. The leading brake lever 38 may have a finger 60 extending from the lever that engages detents 62,63 in the body to maintain the lever in a desired position. The body 22 may be provided with the detents 62,63 to fix the position of the leading brake lever in the locked and unlocked positions, respectively. The finger 60 of the leading brake lever may cooperate with the detents 62,63 and may have a curved distal end to allow the finger to slide and transition into and out of the detents. The leading brake lever 38 may have a notch 64, and a lock block 66 may be coupled to the leading brake lever at the notch. The lock block 66 may be configured to slide (for instance, vertically as shown in Figure 7) within the body 22. The lock block 66 may be coupled to a wheel teeth lock 68. The wheel teeth lock 68 may move within the body 22 (for instance, vertically as shown in Figure 6) to engage wheel teeth 56 formed on an inner diameter surface of the wheel 24. The assembly of the lock block 66 and wheel teeth lock 68 may be biased away from the wheel teeth 56 by a spring (not shown).

The leading brake lever 38 may be rotated between an unlocked position in which the lock block 66 lifts the wheel teeth lock 68 upward out of engagement with the wheel teeth 56 to allow rotation of the wheel 24 about the body 22, and a locked position in which the lock block forces the wheel teeth lock downward into engagement with the wheel teeth to prevent rotation of the wheel about the body. Figure 7 shows the leading brake lever 38 in an unlocked position. Making reference to Figure 7, to position the leading brake lever 38 to the locked position, the leading brake lever 38 may be pivoted counterclockwise to drive the lock block 66 and the wheel teeth lock 68 downward. Downward force on the leading brake lever causes the lever to pivot about its pivot pin 58 releasing the finger 60 from the detent 62. The downward motion of the lock block 66 also drives the wheel teeth lock 68 against the wheel teeth 56 thereby preventing rotation of the wheel 24 about the wheel axis 28. To re-position the leading brake lever 38 to the un-locked position, the brake lever may be pivoted clockwise to raise the assembly of the lock block 66 and the wheel teeth lock 68 and release the wheel teeth lock from the wheel teeth 56 thereby allowing rotation of the wheel 24 about the wheel axis 28.

The stem 34 is rotatably mounted in the stem cavity 32 to permit rotation of the stem relative to the body about the stem axis 36. A bearing 70 may be provided to facilitate rotation of the stem 34 in the stem cavity 32. The bearing 70 and stem 34 may be retained in the stem cavity with a stem cap 72. Once installed in the application, weight applied downward to the stem 34 may also facilitate engagement of the stem and the bearing 70 in the stem cavity 32. The stem 34 comprises a spline shaft 74. The spline shaft 74 may be disposed within a hollow interior 76 formed within the stem. A spring 78 may also be disposed in the hollow interior 76 of the stem 34. The spline shaft 74 is prevented from rotation within the hollow interior of the stem 34 by a pin 80. The pin 80 allows the spline shaft 74 to reciprocate (vertically in Figures 6 and 7) within the hollow interior 76 of the stem 34 without rotation about the stem axis 36. The spline shaft 74 comprises a plurality of splines 82 extending around an intermediate section 84 of the spline shaft. The intermediate section 84 of the spline shaft 74 may be tapered. A distal end 86 of the spline shaft 74 may extend away from the intermediate section 84 along a center axis of the spline shaft.

In the stem cavity 32, a spline bushing 88 is provided. The spline bushing 88 has an interior with a plurality of splines 90 and an exterior with a tab 92 which cooperates with the stem cavity 32 to prevent the spline bushing from rotation within the stem cavity. The splines 90 of the spline bushing 88 may cooperate with the splines 82 of the spline shaft 74 to allow releasably interlocking of the bushing 88 and shaft 74 together. The splines 90 of the spline bushing 88 may also be tapered to facilitate releasably interlocking of the bushing and shaft together. The stem cavity 32 may have an interior geometry to allow the spline bushing 88 to be inserted therein and constrained from movement. For instance, the spline bushing 88 may have features, including its tab 92, which interlock with the body 22 in the stem cavity 32 so that the body and spline bushing may become integral, moving together as a unit relative to the stem when disengaged from the spline shaft.

The spline bushing 88 has a center axis, which is co-linearly aligned with the center axis of the spline shaft 74. While the drawings show the center axis of the spline shaft 74 co-linearly aligned with the stem center axis 36, the spline shaft center axis may also be offset from the stem center axis. The spline shaft 74 may be movable along the spline shaft center axis toward the spline bushing 88 to engage with the spline bushing in the fixed position, and the spline shaft may be movable along the spline shaft center axis away from the spline bushing to disengage from the spline bushing in the swivel position. In the swivel position, the spline shaft 74 is spaced from the spline bushing 88 so as to allow free rotation of the stem 34 relative to the body 22 about the stem axis 36. In the fixed position, the spline shaft 74 interlocks with the spline bushing 88 to prevent rotation of the stem 74 relative to the body 22 about the stem axis 36. While the drawings show the spline shaft 74 moving relative to the spline bushing 88, the arrangement may be reversed. For instance, in an alternate configuration, the spline bushing may be movable along the spline bushing center axis to engage with and disengage from the spline shaft. By way of example, this configuration may be employed where the stem is integral with the spline bushing and the spline shaft is integral with the body in the stem cavity.

The leading brake lever 38 may have a spline shaft stop 94. When the leading brake lever is in the unlocked position, the spline shaft stop 94 may engage the distal end 86 of the spline shaft, maintaining the spline shaft 74 in a spaced-apart relationship with the spline bushing 88 and allowing the stem 34 and spline shaft to rotate together relative to the body 22 about the swivel axis (i.e., the swivel position). When the leading brake lever 38 is moved downward (for instance, clockwise in Figure 6), the spline shaft stop 94 may disengage from the distal end 86 of the spline shaft 74. The spring 78 housed in the hollow interior 76 of the stem 34 may force the spline shaft 74 downward (Fig. 6) to engage the spline bushing 88 (i.e., the fixed position). The cooperating tapered features of the male and female splines 82,90 may facilitate engagement of the spline shaft 74 with the spline bushing 88 and provide good locking properties with little play. With the leading brake lever 38 in the locked position, and the spline shaft 74 and spline bushing 88 interlocked together in the fixed position, the stem 34 is locked with the body 22 and rotation of the stem relative to the body about the stem axis 36 is prevented.

To reposition the spline shaft 74 and spline bushing 88 to the swivel position, the leading brake lever 38 may be moved upward (for instance clockwise in Figure 7) such that the spline shaft stop 94 may engage the distal end 86 of the spline shaft 74 and forces the spline shaft upward, releasing the spline shaft from the spline bushing 88. Upward motion (for instance clockwise in Figure 7) of the leading brake lever 38 acts against the pressure of the spring 78. With the finger 60 of the leading brake lever engaging its upward detent 62, the spline shaft 74 is moved upward so that the spline shaft spaced away from the spline bushing 88 (i.e., the swivel position).

While the drawings show a leading brake lever that is movable to engage the spline shaft and the wheel, the brake lever may operate solely to prevent rotation of the wheels, and a separate lever may be provided actuate the swivel or stem lock. To lighten the weight of the body, the body may be formed with interior radial spokes 96 in the stem cavity 32. The stem bearing 70 may be mounted on upper flat faces on the spokes 96 in the stem cavity. Additionally, the brake levers 38,40 may be formed with clearance grooves 98 to allow relative motion of the brake levers relative to pivot pins 44,58 and the axle 42 within the body 22.

The embodiments were chosen and described in order to best explain the principles and their application to thereby enable others skilled in the art to best utilize the various embodiments and with various modifications as are suited to the particular use contemplated. As various modifications could be made in the constructions and methods herein described and illustrated without departing from the scope of the invention, it is intended that all matter contained in the foregoing description or shown in the accompanying drawings shall be interpreted as illustrative rather than limiting. Thus, the breadth and scope of the present invention should not be limited by any of the above-described exemplary embodiments, but should be defined only in accordance with the following claims appended.

## Claims

1. A caster (20) comprising:
a body (22);
a wheel (24, 26) operatively rotatably connected to the body (22) and being rotatable about a wheel axis (28);
a wheel lock movable between a locked position in which the wheel (24, 26) is prevented from rotation about the wheel axis (28) and an unlocked position in which the wheel (24, 26) is rotatable about the wheel axis (28);
a stem (34) operatively connected to the body (22) and being rotatable about a stem axis (36), the stem axis (36) being perpendicular to the wheel axis (28); and
a stem lock movable between a fixed position in which the stem (34) is prevented from rotation about the stem axis (36) and a swivel position in which the stem (34) is rotatable about the stem axis (36), and
wherein when the wheel lock is in the unlocked position, the wheel lock engages the stem lock to maintain the stem lock in the swivel position, **characterised in that** the stem lock comprises an interlocking spline shaft (74) and spline bushing (88), the spline shaft (74) having a longitudinal axis parallel to the stem axis (36), the spline bushing (88) having a center axis aligned with the spline shaft (74);
wherein when the stem lock is in the swivel position, the spline shaft (74) is spaced from the spline bushing (88) along the spline shaft axis, and when the stem lock (74) is in the fixed position, the spline shaft (74) engages the spline bushing (88) along the spline shaft axis, and further **characterised in that** when the wheel lock is in the locked position, the wheel lock disengages from the stem lock allowing the stem lock to move to the fixed position.

2. The caster (20) of claim 1 wherein the longitudinal axis of the spline shaft (74) and the stem axis (36) are aligned.

3. The caster (20) of claim 1 wherein the spline shaft (74) is operatively connected with the stem (34).

4. The caster (20) of claim 1 wherein the spline bushing (88) is located in a cavity (32) in the body (22).

5. The caster (20) of claim 4 wherein the spline bushing (88) has a tab (92) that cooperates with the cavity (32) to prevent rotation of the bushing (88) in the cavity (32).

6. The caster (20) of claim 1 wherein the spline shaft (74) and the spline bushing (88) have cooperating tapered features (82, 90).

7. The caster (20) of claim 1 further comprising a spring (78) configured to urge the stem lock to the fixed position.

8. The caster (20) of claim 7 wherein the spring (78) urges the spline shaft (74) into engagement with the spline bushing (88) when the stem lock is moved to the fixed position.

9. The caster (20) of claim 1 wherein when the wheel lock is in the unlocked position, the wheel lock engages a tip on a longitudinal end (86) of the spline shaft (74) to maintain the stem lock in the swivel position, and when the wheel lock is in the locked position, the wheel lock disengages from the spline shift tip allowing the stem lock to move to the fixed position.

## Patentansprüche

1. Lenkrolle (20), umfassend:
Einen Körper (22);
ein Rad (24, 26), das mit dem Körper (22) funktionell drehbar verbunden und um eine Radachse (28) drehbar ist;
eine Radverriegelung, die zwischen einer verriegelten Position, in welcher das Rad (24, 26) daran gehindert wird, sich um die Radachse (28) zu drehen, und einer nicht verriegelten Position bewegbar ist, in welcher das Rad (24, 26) um die Radachse (28) drehbar ist;
einen Bolzenschaft (34), der funktionell mit dem Körper (22) verbunden und um eine Achse (36) des Bolzenschafts drehbar ist, wobei Achse (36) des Bolzenschafts senkrecht zur Radachse (28) ist; und
eine Verriegelung des Bolzenschafts zwischen einer ortsfesten Position, in welcher der Bolzenschaft (34) daran gehindert wird, sich um die Achse (36) des Bolzenschafts zu drehen, und einer Schwenkposition bewegbar ist, in welcher der Bolzenschaft (34) um die Achse (36) des Bolzenschafts drehbar ist, und
wobei, wenn sich die Radverriegelung in der entriegelten Position befindet, die Radverriegelung in die Verriegelung des Bolzenschafts eingreift, um die Verriegelung des Bolzenschafts in der Schwenkposition beizubehalten, **dadurch gekennzeichnet, dass** die Verriegelung des Bolzenschafts eine ineinandergreifende Keilwelle (74) und Keilbuchse (88) umfasst, wobei die Keilwelle (74) eine Längsachse parallel zur Achse (36) des Bolzenschafts aufweist, die Keilbuchse (88) eine mittige Achse aufweist, die mit der Keilwelle (74) ausgerichtet ist;
wobei, wenn sich die Verriegelung des Bolzenschafts in der Schwenkposition befindet, die Keilwelle (74) von der Keilbuchse (88) entlang der Keilwellenachse beabstandet ist und, wenn sich die Verriegelung des Bolzenschafts (74) in der ortsfesten Position, greift die Keilwelle (74) entlang der Keilwellenachse in die Keilbuchse (88) ein, und ferner **dadurch gekennzeichnet, dass**, wenn sich die Radverriegelung in der verriegelten Position befindet, sich die Radverriegelung von der Verriegelung des Bolzenschafts löst, was der Verriegelung des Bolzenschafts ermöglicht, sich in die ortsfeste Position zu bewegen.

2. Lenkrolle (20) nach Anspruch 1, wobei die Längsachse der Keilwelle (74) und die Achse (36) des Bolzenschafts ausgerichtet sind.

3. Lenkrolle (20) nach Anspruch 1, wobei die Keilwelle (74) funktionell mit dem Bolzenschaft (34) verbunden ist.

4. Lenkrolle (20) nach Anspruch 1, wobei sich die Keilbuchse (88) in einem Hohlraum (32) im Körper (22) befindet.

5. Lenkrolle (20) nach Anspruch 4, wobei die Keilbuchse (88) eine Lasche (92) aufweist, die mit dem Hohlraum (32) kooperiert, um Drehung der Buchse (88) im Hohlraum (32) zu verhindern.

6. Lenkrolle (20) nach Anspruch 1, wobei die Keilwelle (74) und die Keilbuchse (88) kooperierende verjüngte Merkmale (82, 90) aufweisen.

7. Lenkrolle (20) nach Anspruch, die ferner eine Feder (78) umfasst, die ausgelegt ist, die Verriegelung des Bolzenschafts in die ortsfeste Position zu drängen.

8. Lenkrolle (20) nach Anspruch 7, wobei die Feder (78) die Keilwelle (74) zum Eingriff in die Keilbuchse (88) drängt, wenn die Verriegelung des Bolzenschafts in die ortsfeste Position bewegt wird.

9. Lenkrolle (20) nach Anspruch 1, wobei, wenn sich die Radverriegelung in der entriegelten Position befindet, die Radverriegelung in eine Spitze an einem longitudinalen Ende (86) der Keilwelle (74) eingreift, um die Verriegelung des Bolzenschafts in der Schwenkposition beizubehalten und, wenn sich die Radverriegelung in der verriegelten Position befindet, löst sich die Radverriegelung von der Keilwellenspitze, was der Verriegelung des Bolzenschafts ermöglicht, sich in die ortsfeste Position zu bewegen.

## Revendications

1. Une roulette (20) comprenant :
un corps (22) ;
une roue (24, 26) reliée fonctionnellement en rotation sur le corps (22) et pouvant tourner autour d'un axe de roue (28) ;
un verrou de roue mobile entre une position verrouillée dans laquelle la roue (24, 26) est empêchée de tourner autour de l'axe de roue (28) et une position non verrouillée dans laquelle la roue (24, 26) peut tourner autour de l'axe de roue (28) ;
une tige (34) reliée fonctionnellement au corps (22) et pouvant tourner autour d'un axe de tige (36), l'axe de tige (36) étant perpendiculaire à l'axe de roue (28) ; et
un verrou de tige mobile entre une position fixe dans laquelle la tige (34) est empêchée de tourner autour de l'axe de tige (36) et une position de pivotement dans laquelle la tige (34) peut tourner autour de l'axe de tige (36), et
dans laquelle, quand le verrou de roue est en position non verrouillée, le verrou de roue met en prise le verrou de tige pour maintenir le verrou de tige en position de pivotement, **caractérisée en ce que** le verrou de tige comprend un arbre cannelé (74) et une douille cannelée (88) enclenchables, l'arbre cannelé (74) ayant un axe longitudinal parallèle à l'axe de la tige (36), la douille cannelée (88) ayant un axe central aligné avec l'arbre cannelé (74) ;
dans laquelle, quand le verrou de tige est en position de pivotement, l'arbre cannelé (74) est espacé de la douille cannelée (88) le long de l'axe de l'arbre cannelé, et quand le verrou de tige (74) est en position fixe, l'arbre cannelé (74) met en prise la douille cannelée (88) le long de l'axe de l'arbre cannelé, et **caractérisée** en sus **en ce que**, quand le verrou de roue est en position verrouillée, le verrou de roue se désengage du verrou de tige ce qui permet au verrou de tige de se déplacer à la position fixe.

2. La roulette (20) de la revendication 1, dans laquelle l'axe longitudinal de l'arbre cannelé (74) et de l'axe de tige (36) sont alignés.

3. La roulette (20) de la revendication 1, dans laquelle l'arbre cannelé (74) est relié fonctionnellement à la tige (34).

4. La roulette (20) de la revendication 1, dans laquelle la douille cannelée (88) est située dans une cavité (32) du corps (22).

5. La roulette (20) de la revendication 4, dans laquelle la douille cannelée (88) a une languette (92) qui coopère avec la cavité (32) pour empêcher la rotation de la douille (88) dans la cavité (32).

6. La roulette (20) de la revendication 1, dans laquelle l'arbre cannelé (74) et la douille cannelée (88) ont des caractéristiques coniques coopérantes (82, 90).

7. La roulette (20) de la revendication 1, comprenant en sus un ressort (78) configuré pour pousser le verrou de tige vers la position fixe.

8. La roulette (20) de la revendication 7, dans laquelle le ressort (78) pousse l'arbre cannelé (74) en prise avec la douille cannelée (88) quand le verrou de tige est déplacé à la position fixe.

9. La roulette (20) de la revendication 1, dans laquelle, quand le verrou de roue est en position non verrouillée, le verrou de roue met en prise une pointe sur une extrémité longitudinale (86) de l'arbre cannelé (74) pour maintenir le verrou de tige en position de pivotement, et quand le verrou de roue est en position verrouillée, le verrou de roue se désengage de la pointe de l'arbre cannelé ce qui permet au verrou de tige de se déplacer à la position fixe.
